# EUROPÄISCHE PATENTSCHRIFT

(11) **EP 3 170 248 B1**
(45) Veröffentlichungstag und Bekanntmachung des Hinweises auf die Patenterteilung: **02.05.2018**
(21) Anmeldenummer: 15723717.3
(22) Anmeldetag: 22.05.2015
(51) Int. Cl.: H02K 41/03, H02K 11/20, H02K 11/33, H02K 33/02, H02K 33/16

(54) **ELEKTRISCHE LINEARMASCHINE**
ELECTRIC LINEAR MACHINE
MACHINE ÉLECTRIQUE LINÉAIRE

(30) Priorität: 15.07.2014 DE 102014213713
(43) Veröffentlichungstag der Anmeldung: 24.05.2017
(73) Patentinhaber: Robert Bosch GmbH, 70442 Stuttgart (DE)
(72) Erfinder: PAWELETZ, Anton, 70736 Fellbach (DE); XIANG, Li, 70569 Stuttgart (DE)
(86) Internationale Anmeldenummer: PCT/EP2015/061403
(87) Internationale Veröffentlichungsnummer: WO 2016/008627

(56) Entgegenhaltungen:
- DE-C1- 10 055 078
- JP-A- 2008 206 356

## Beschreibung

Die Erfindung betrifft eine elektrische Linearmaschine, mit einem gehäusefesten Stator und mit einem axial verlagerbaren und einen Permanentmagneten tragenden Anker.

### Stand der Technik

Elektrische Linearmaschinen sind grundsätzlich bekannt. So offenbart beispielsweise die Offenlegungsschrift DE 100 55 078 C1 eine elektrische Linearmaschine, die als eine elektrischen Reluktanzmaschine nach dem Transversalflussprinzip arbeitet, bei welcher also ein Magnetfluss quer (transversal) zur Bewegungsrichtung eines oszillierenden Ankers (Oszillator) verläuft. Durch die elektrische Erregung dieser Linearmaschine sollen Nachteile überwunden werden, die Linearmaschinen aufweisen, welche den magnetischen Fluss durch das Vorsehen durch Permanentmagneten erzeugen. Insbesondere soll dadurch der Nachteil überwunden werden, dass der Wirkungsgrad von Permanentmagnet erregter Linearmaschinen bei höheren Betriebstemperaturen aufgrund einer reversiblen Entmagnetisierung schnell abnimmt oder im Falle einer irreversiblen Entmagnetisierung dauerhaft beschädigt werden kann.

Aus der Offenlegungsschrift JP 2008-206356 A ist weiterhin eine Linearmaschine bekannt, bei der mehrere Permanentmagnete sowie zwei elektrisch erregbare Spulen zum Betreiben der Maschine vorgesehen sind. Die Permanentmagnete müssen dabei durch nicht-magnetische Elemente befestigt werden, was zusätzlichen Konstruktionsaufwand und Materialkosten bedeutet, insbesondere wenn hohe Betriebstemperaturen zu erwarten sind.

### Offenbarung der Erfindung

Die erfindungsgemäße elektrische Linearmaschine hat den Vorteil, dass eine einfache Konstruktion bei geringen Kosten (insbesondere durch einfache, standardisierte Laminierung des magnetischen Kreises mit Elektroblech) bereitgestellt wird, die insbesondere einen oszillierenden Betrieb des Ankers dauerhaft gewährleistet. Insbesondere, weil lediglich eine bestrombare Spule zum Betreiben der erfindungsgemäßen elektrischen Maschine notwendig ist, ist die Konstruktion sowie die Ansteuerung der elektrischen Maschine im Vergleich zu bekannten elektrischen Maschinen einfach und sehr präzise.

Die erfindungsgemäße elektrische Maschine zeichnet sich dadurch aus, dass der Stator ein erstes und ein zweites Statorjoch aufweist, die jeweils zwei Statorpole bilden, wobei die Statorpole radial und gleichmäßig um den Anker herum verteilt angeordnet sind, und wobei dem ersten Statorjoch zumindest eine bestrombare Spule zur Erzeugung eines ersten Magnetflusses durch das erste Statorjoch und den Permanentmagneten zugeordnet ist, und wobei ein magnetischer Nordpol des Permanentmagneten einem Statorpol des zweiten Statorjochs und ein magnetischer Südpol des Permanentmagneten dem anderen Statorpol des zweiten Statorjochs zugeordnet ist, um einen zweiten Magnetfluss durch das zweite Statorjoch zu erzeugen. Der Stator weist also zwei Statorjoche auf, die jeweils zwei Statorpole bilden. Die Statorpole sind durch ihre regelmäßig über den Umfang des Ankers verteilte Anordnung gleichmäßig beabstandet zueinander angeordnet. Zweckmäßigerweise liegen dabei die Statorpole eines Statorjochs einander gegenüber. In dem Luftspalt zwischen den Statorpolen liegt der Anker mit dem Permanentmagnet. Der Nordpol ist dabei einem und der Südpol dem anderen Statorpol eines Statorjochs zugeordnet. Dem anderen Statorjoch ist die bestrombare Spule zugeordnet. Damit ist ein erster Magnetfluss durch das erste Statorjoch elektrisch erzeugbar und durch das zweite Statorjoch magnetisch. Die so aufgebaute elektrische Linearmaschine erzeugt sowohl eine magnetische Transversalflusskomponente als auch eine magnetische Längskomponente, die beide gleichzeitig wirken, um das Verlagern, insbesondere ein Oszillieren des Ankers in axialer Richtung zu bewirken. Dabei reicht die eine Spule aus, um die elektrische Linearmaschine, die insofern bevorzugt zumindest teilweise auch als Reluktanzlinearmaschine arbeitet, zu betreiben. Insbesondere ist die Linearmaschine als Linear-Reluktanzmaschine oder als Hybrid-Linear-Reluktanzmaschine ausgebildet.

Gemäß einer vorteilhaften Weiterbildung der Erfindung ist vorgesehen, dass dem Anker wenigstens ein Federelement zugeordnet ist, welches den Anker derart vorspannt, dass sich der Permanentmagnet außerhalb einer magnetisch neutralen Ruhelage befindet. Unter der neutralen beziehungsweise magnetisch neutralen Ruhelage wird die Lage des Permanentmagneten verstanden, in welcher sich der Permanentmagnet bezüglich des Stators befindet, wenn keine äußeren Einflüsse auf ihn einwirken. Ohne Bestromung der Spule und ohne das Federelement würde sich der Permanentmagnet in eine magnetisch neutrale Ruhelage bezüglich der Statorpole einpendeln. Durch das Vorsehen des Federelementes, welches den Anker derart vorspannt, dass das Federelement außerhalb seiner Ruhelage vorliegt, befindet sich der Anker im unbestromten Zustand in einer magnetisch vorgespannten Stellung, so dass die Inbetriebnahme in eine gewünschte Richtung und in kurzer Zeit sicher erfolgen kann.

Weiterhin ist bevorzugt vorgesehen, dass der Permanentmagnet eine erste durch den Permanentmagnet bestimmte magnetisch neutrale Ruhelage und eine zweite durch die bestromte Spule bestimmte magnetisch neutrale Ruhelage aufweist, wobei die erste und die zweite magnetisch neutrale Ruhelage axial voneinander beabstandet sind. Bei der ersten neutralen Ruhelage handelt es sich insofern um die zuvor beschriebene Ruhelage des Ankers beziehungsweise des Permanentmagneten. Die zweite neutrale Ruhelage wird dann erreicht, wenn die Spule bestromt und dadurch ein elektrisch erregter Magnetfluss in dem Stator erzeugt wird, durch welchen der Anker in eine zweite Stellung, nämlich die neutrale bestromte Stellung, gedrängt wird. Insbesondere ist unter der zweiten neutralen Ruhestellung die Stellung zu verstehen, bei welcher die Spule mit maximalem Strom bestromt wird.

Ferner ist bevorzugt vorgesehen, dass dem Permanentmagnet wenigstens ein Stahllamellenpaket zugeordnet ist, um einen Magnetfluss zu lenken. Durch das Stahllamellenpaket, insbesondere durch die Ausrichtung der Stahllamellen lässt sich der Magnetfluss bezüglich des Permanentmagneten beeinflussen. Insbesondere können die Stahllamellen derart an dem Permanentmagneten angeordnet und/oder ausgerichtet sein, dass ein Magnetfluss in eine bestimmte Richtung verhindert oder zumindest reduziert und in eine andere Richtung bevorzugt zugelassen wird. Insbesondere lässt sich dadurch erreichen, dass der durch die Spule erregte erste Magnetfluss an dem Permanentmagneten vorbeigeleitet wird, insbesondere ohne dabei den zweiten Magnetfluss zu beeinträchtigen.

Gemäß einer bevorzugten Weiterbildung der Erfindung ist vorgesehen, dass am Nordpol des Permanentmagneten und an dem Südpol des Permanentmagneten jeweils ein Stahllamellenpaket angeordnet ist, dessen Stahllamellen sich senkrecht zu dem zweiten Magnetfluss erstrecken. Damit erstrecken sich die Lamellen gleichzeitig parallel zu dem ersten Magnetfluss. Dadurch wird der erste, durch die bestromte Spule erzeugte Magnetfluss, durch die Stahllamellen an dem Permanentmagneten vorbeigeleitet, während der durch den Permanentmagneten erregte zweite Magnetfluss der Ausrichtung beziehungsweise dem natürlichen Magnetfeld des Permanentmagneten folgen kann.

Weiterhin ist bevorzugt vorgesehen, dass die Statorpole jeweils ein Stahllamellenpaket aufweisen, dessen Stahllamellen sich in Richtung des jeweiligen Magnetflusses auf den Permanentmagneten zu erstrecken. Durch das Vorsehen der Stahllamellen an den Statorpolen lässt sich der jeweilige Magnetfluss in Bezug auf den Luftspalt zwischen den Statorpolen beziehungsweise zwischen den Statorpolen und dem Permanentmagneten, vorteilhaft lenken. Besonders bevorzugt sind das erste und/oder das zweite Statorjoch insgesamt als Stahllamellenpakete ausgebildet.

Gemäß einer bevorzugten Weiterbildung der Erfindung ist vorgesehen, dass das jeweilige Statorjoch jeweils als offener Statorring ausgebildet ist, dessen freie Enden jeweils einen der Statorpole bilden. Durch die Ausbildung als offener Statorring, weist das jeweilige Statorjoch zwei einander gegenüberliegende freie Enden auf, die vorliegend die Statorpole bilden. Dadurch wird ein vorteilhafter Magnetfluss, sowohl permanentmagnetisch erregt als auch elektrisch erregt, gewährleistet. Der jeweilige Statorring kann dabei kreisförmig, ovalförmig oder auch rechteckförmig ausgebildet sein. Besonders bevorzugt weist das jeweilige Statorjoch auf der dem Schlitz beziehungsweise Luftspalt gegenüberliegenden Seite einen radial nach innen vorstehenden (also in Richtung der Statorpole beziehungsweise des Luftspalts weisenden) Vorsprung auf, um den ersten Magnetfluss, der in Längsrichtung des Ankers wirkt, zu optimieren.

Weiterhin ist bevorzugt vorgesehen, dass der Permanentmagnet an einer bezüglich des ersten Statorjochs nach innen weisenden Stirnseite ein Stahllamellenpaket aufweist, dessen Stahllamellen sich senkrecht zu dem zweiten Magnetfluss erstrecken. Dadurch wird der erste Magnetfluss, insbesondere in Richtung des radial nach innen ragenden Vorsprungs des entsprechenden Statorjochs geleitet, wodurch der magnetische Widerstand verringert und der Magnetfluss erhöht wird.

Ferner ist gemäß einer bevorzugten Ausführungsform der Erfindung vorgesehen, dass dem zweiten Statorjoch zur Erfassung des zweiten Magnetflusses eine Sensoreinrichtung, insbesondere mit einer Sensorspule, zugeordnet ist. Während dem ersten Statorjoch die bestrombare Spule zugeordnet ist, ist dem zweiten Statorjoch eine Sensoreinrichtung zugeordnet, die den durch das zweite Statorjoch erzeugten Magnetfluss erfasst. In Abhängigkeit von der Position des Permanentmagneten bezüglich der Statorpole des zweiten Statorjochs verändert sich der Magnetfluss durch das Statorjoch, so dass in Abhängigkeit von dem erfassten Magnetfluss die Lage des Permanentmagneten und damit des Ankers bezüglich des Stator bestimmbar beziehungsweise ermittelbar ist. Vorzugsweise weist die Sensoreinrichtung eine Sensorspule auf, die insbesondere um das zweite Statorjoch herumgewickelt ist. Durch eine derart einfache Konstruktion lässt sich der Magnetfluss, der durch das zweite Statorjoch führt, leicht und verlässlich erfassen.

Weiterhin ist bevorzugt vorgesehen, dass eine Steuereinheit vorgesehen ist, die in Abhängigkeit von dem erfassten zweiten Magnetfluss die Spule bestromt. Die Steuereinheit wertet somit die von der Sensoreinrichtung erfassten Messdaten bezüglich des Magnetflusses aus, um beispielsweise die Lage des Permanentmagneten und des Ankers bezüglich des Stators zu bestimmen. In Abhängigkeit von der erfassten Lage beziehungsweise den erfassten Messdaten bestromt die Steuereinheit die Spule des ersten Statorjochs, um die elektrische Linearmaschine zu betreiben. Da die Lage des Ankers und insbesondere des Permanentmagneten bezüglich der Statorpole nunmehr bekannt ist, lässt sich der Betrieb der elektrischen Maschine durch das Bestromen der nur einen Spule dennoch sicher und effizient gestalten.

Vorzugsweise ist dem ersten Statorjoch eine zweite Spule zugeordnet, wobei die erste Spule und die zweite Spule des ersten Statorjochs durch einen Stahllamellenpaketring voneinander getrennt sind, und wobei der Permanentmagnet des Ankers im Bereich des Stahllamellenpaketrings in seiner Ruhelage angeordnet ist. Durch das Vorsehen einer zweiten bestrombaren Spule lässt sich beispielsweise die durch die Linearmaschine erbrachte Leistung erhöhen und gegebenenfalls die Frequenz des oszillierenden Ankers erhöhen.

Im Folgenden soll die Erfindung anhand der Zeichnung näher erläutert werden. Dazu zeigen:
- Figur 1: ein erstes Ausführungsbeispiel einer elektrischen Linearmaschine.
- Figur 2: eine Draufsicht auf die Linearmaschine,
- Figuren 3A und B: Schnittdarstellungen der Linearmaschine,
- Figuren 4A und B: einen ersten und einen zweiten Magnetfluss der Linearmaschine und
- Figur 5: eine zweite Ausführungsform der elektrischen Linearmaschine, jeweils in einer schematischen Darstellung.

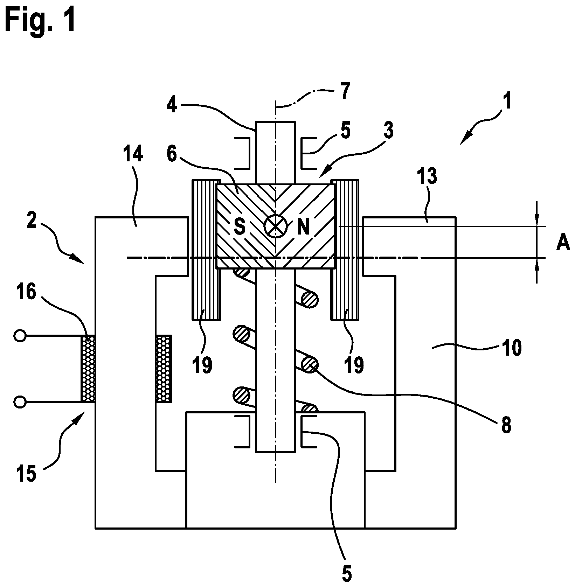

Figur 1 zeigt in einer schematischen Darstellung eine elektrische Linearmaschine 1, die einen gehäusefesten Stator 2 sowie einen linear beziehungsweise axial verlagerbaren Anker 3 aufweist. Der Stator 2 ist dazu in einem hier nicht näher dargestellten Gehäuse fest angeordnet. Der Anker 3 weist eine Ankerwelle 4 auf, die durch zwei Linearlager 5 (hier nur schematisch dargestellt), in dem Gehäuse der Linearmaschine 1 gehalten ist.

Auf der Ankerwelle 4 ist weiterhin ein Permanentmagnet 5 fest mit der Ankerwelle 4 verbunden angeordnet. Der Permanentmagnet weist einen magnetischen Nordpol N und einen magnetischen Südpol S auf. Dabei ist die magnetische Achse durch Südpol und Nordpol senkrecht zur Verschiebeachse beziehungsweise Ankerachse 7 des Ankers 3 ausgerichtet. Zwischen dem Permanentmagneten 6 und einem der Linearlager 5 ist außerdem ein Federelement 8, vorliegend in Form einer Schraubenfeder, angeordnet, welches den Anker 3 mit einer Federvorspannkraft beaufschlagt, die insbesondere einer im Folgenden näher beschriebenen Magnetkraft entgegenwirkt.

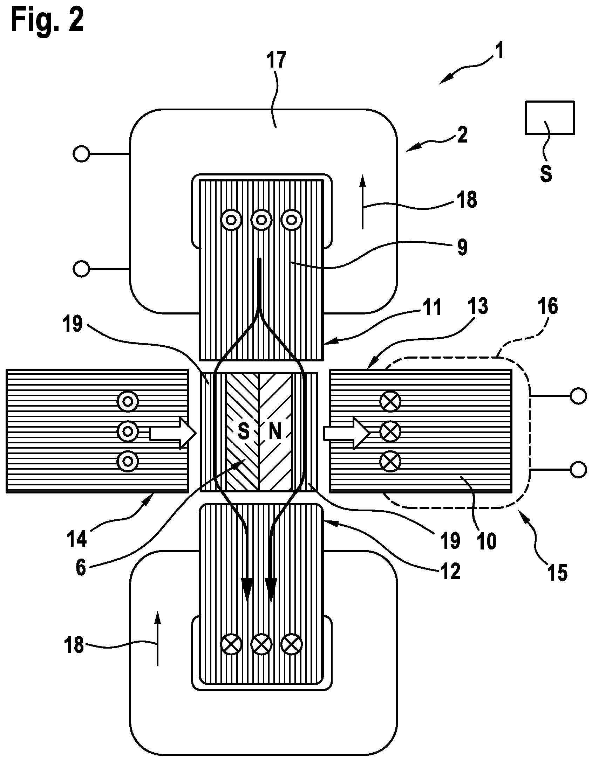

Figur 2 zeigt eine Draufsicht auf die Linearmaschine 1. Der Stator 2 weist ein erstes Statorjoch 9 sowie ein zweites Statorjoch 10 auf. Die beiden Statorjochs 9, 10 sind als offene Statorringe im Wesentlichen ringförmig ausgebildet und weisen einen Schlitz beziehungsweise Luftspalt auf, so dass sie einen offenen Ring mit zwei aufeinander zuweisenden freien Enden bilden. Jedes Statorjoch 9, 10 bildet dabei an jedem seiner freien Enden einen Statorpol 11, 12 beziehungsweise 13, 14. Die Statorpole 11 bis 14 sind gleichmäßig um den Umfang des Ankers 3 verteilt angeordnet, so dass sich jeweils zwei Statorpole 11, 12 beziehungsweise 13, 14 des jeweiligen Statorjochs 9, 10 gegenüberliegen. In dem Luftspalt zwischen den Statorpolen 11 bis 14 ist der Permanentmagnet 6 angeordnet, wobei der magnetische Südpol S dem Statorpol 14 und der Nordpol N dem Statorpol 13 zugeordnet ist, so dass die magnetische Achse des Permanentmagneten 6 von dem Statorpol 14 zu dem Statorpol 13 des Statorjochs 10 führt. Liegt der Permanentmagnet 6 somit in der beschriebenen Lage, erzeugt er einen Magnetfluss durch das zweite Statorjoch.

Weiterhin ist dem Statorjoch 10 eine Sensoreinrichtung 15 zugeordnet, die eine Sensorspule 16 aufweist, welche um das Statorjoch 10 herum gewickelt ist, um einen Magnetfluss durch das Statorjoch 10 zu erfassen. Mittels der Sensoreinrichtung 15 kann somit der durch den Permanentmagneten 6 erzeugte Magnetfluss durch das Statorjoch 10 sensiert beziehungsweise erfasst werden.

Dem ersten Statorjoch 9 ist eine bestrombare Spule 17 zugeordnet, die um das Statorjoch 9 herumgewickelt ist. Durch Bestromen der Spule 17 wird ein Stromfluss in Richtung eines Pfeils 18 um das Statorjoch 9 herum erzeugt, wobei durch den erzeugten Stromfluss in dem Statorjoch 9 ein Magnetfluss erzeugt wird, der von dem Statorpol 11 zu dem Statorpol 12 führt, wie durch Pfeile angedeutet.

An dem Permanentmagneten 6 ist dabei seitlich an dem magnetischen Nordpol N und an dem magnetischen Südpol S jeweils ein Stahllamellenpaket 19 angeordnet. Die Stahllamellen des jeweiligen Stahllamellenpakets 19 erstrecken sich senkrecht zu dem durch den Permanentmagneten 6 erzeugten Magnetfluss, so dass sie den durch die bestrombare Spule 17 erzeugten Magnetfluss des Statorjoch 9 von dem Statorpol 11 zu dem Statorpol 12 an dem Permanentmagneten 6 vorbeileiten.

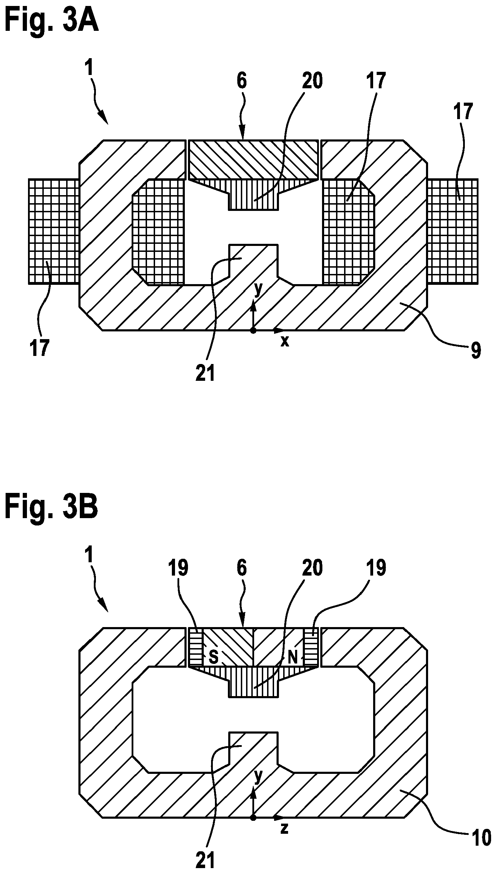

Figuren 3A und 3B zeigen besondere, vereinfachte Schnittdarstellungen durch die Linearmaschine 1, wobei Figur 3A einen Schnitt durch die Ebene des Statorjochs 9 und Figur 3B einen Schnitt durch die Ebene des Statorjochs 10 zeigt. In Figuren 3A und 3B ist zu erkennen, dass der Stator 2 der Linearmaschine 1 mittig einen Abschnitt mit verringertem Abstand aufweist. Dieser Abstand wird dadurch gebildet, dass einerseits der Permanentmagnet 6 an seiner Innenseite mit einem Lamellenpaket 20 versehen ist, und dass die Statorjochs 9, 10 auf der dem Permanentmagneten 6 gegenüberliegenden Seite mit einem nach innen ragenden Vorsprung 21 versehen sind, wodurch der Abstand der ringförmigen Statorjochs 9, 10 zu dem Permanentmagneten 6 verringert wird. Das Stahllamellenpaket 20 ist derart ausgebildet, dass seine Stahllamellen sich quer beziehungsweise senkrecht zur magnetischen Achse des Permanentmagneten 6 erstrecken und insofern parallel zu den Stahllamellen der Stahllamellenpakete 19 ausgerichtet sind.

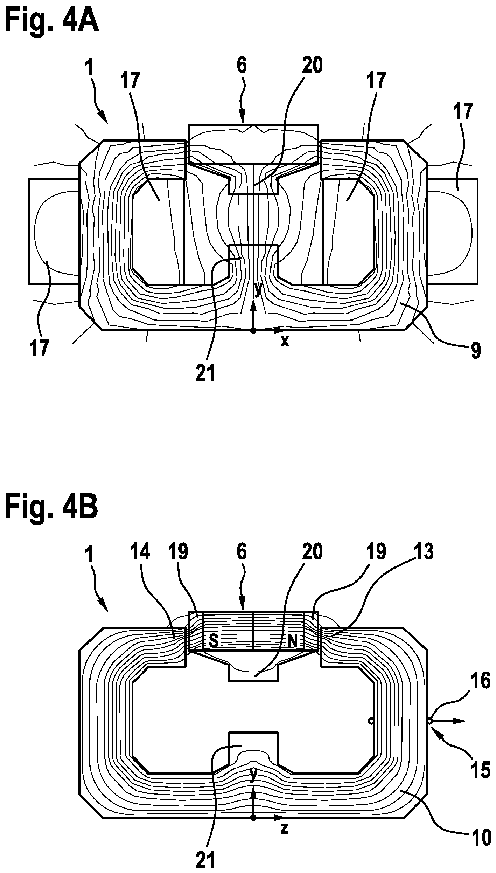

Figuren 4A und 4B zeigen simulierte Magnetflüsse durch die Statorjochs 9, 10 (in so genannter d- und q-Achse). Der den Permanentmagneten 6 erzeugte Magnetfluss gemäß Figur 4B verläuft von dem magnetischen Nordpol N, durch ein erstes Stahllamellenpaket 19, einen Luftspalt und in das Statorjoch 10, und von dort durch einen zweiten Luftspalt in das zweite Lamellenpaket 19 und zurück in den magnetischen Südpol S, wodurch ein geschlossener Magnetkreis gebildet wird. Das Stahllamellenpaket 20 verhindert einen Kurzschluss des Magnetflusses. Die magnetische Leitfähigkeit µ_{R} ergibt sich insbesondere in Abhängigkeit von der Anzahl und Dicke der Stahllamellen. Eine Magnetkraft wird dabei auf den Permanentmagneten 6 in Richtung der Ankerachse 7 erzeugt, aufgrund der Veranlagung, einen minimalen Magnetwiderstand in dem Luftspalt zu erreichen. Dadurch wird der Permanentmagnet 6 mit dem Anker 3 axial entlang der Ankerachse 7 senkrecht zu dem durch den Permanentmagnet 6 erregten Magnetfluss verlagert beziehungsweise in eine Ruhelage gedrängt, in welcher der Magnetfluss den geringsten Widerstand aufweist. In Abhängigkeit von der Stellung des Permanentmagneten 6 zu den Statorpolen 13, 14 verändert sich der Magnetfluss durch das Statorjoch 10. Dies wird durch die Sensoreinrichtung 15 erkannt. In Abhängigkeit des sich verändernden Magnetflusses kann auf eine Veränderung der Position des Permanentmagneten 6 und damit des Ankers 3 geschlossen werden. Durch die Sensoreinrichtung 15 mit der Sensorspule 17 kann somit eine genaue Positionsbestimmung des Ankers 3 erfolgen. Vorzugsweise wird die Sensorspule 16 dazu nicht bestromt. Dadurch wird erreicht, dass die Positions- beziehungsweise Lagebestimmung des Ankers unabhängig von einer Stromzufuhr erfasst wird.

Da die magnetische Achse des Permanentmagneten 6 einen Magnetfluss nur durch das Statorjoch 10 erzeugt, ist seine magnetische Leitfähigkeit µ_{R} senkrecht zur Magnetachse ungefähr 1,05, was etwa der magnetische Leitfähigkeit (Permeabilität) Durchlässigkeit von Luft entspricht. Die Stahllamellenpakete 19 haben eine Durchlässigkeit entsprechend des gewählten Stahls.

Die bestrombare Spule 17 ist derart ausgebildet, dass der durch sie erzeugte Magnetfluss eine Kraft in Richtung der Ankerachse 7 erzeugt, die der durch den Permanentmagneten 6 erzeugten und zuvor beschriebenen Kraft entgegengesetzt ist. Die Magnetkraft ist dabei eine längswirkende Kraft, wie in Figur 4A gezeigt, während die Magnetkraft durch den Permanentmagneten 6 eine Transversalkraft ist, wie in Figur 4B gezeigt.

Im Betrieb der Linearmaschine 1 durch eine Steuereinheit E, die die Messwerte der Sensoreinrichtung 15 auswertet und die Spule 17 entsprechend bestromt, wird der Anker 6 somit durch den Permanentmagneten in eine erste Richtung aus dem Stator 2 heraus, und durch das Bestromen der Spule 17 in den Stator hineingedrängt, wobei durch die Sensoreinrichtung 15 die aktuelle Position des Ankers 3 auf einfache Art und Weise bestimmbar ist, und damit ein präzises Ansteuern beziehungsweise Bestromen der Spule 17 für einen oszillierenden Betrieb der Linearmaschine 1 ansteuerbar ist. Die Linearmaschine 1 ist dabei derart ausgebildet, dass eine magnetisch neutrale Ruhelage des Permanentmagneten 6, die durch den Permanentmagneten bedingt wird, sich von einer magnetisch neutralen Ruhelage des Permanentmagneten 6 unterscheidet, die sich durch das Bestromen der Spule 17 ergibt. Wird die Spule 17 nicht bestromt, so drängt der Permanentmagnet 6 den Anker 3 in seine erste neutrale Ruhelage. Durch Bestromen der Spule 17 wird dann der Permanentmagnet 6 in Richtung der durch die bestromte Spule 17 bedingte Ruhelage bewegt. Dadurch wird stets der Anker in die richtige beziehungsweise gewünschte Richtung verlagert, wenn die Spule 17 bestromt wird. Die Spule 17 ist dabei beispielsweise als Kupferwicklung, beispielsweise mit sechzig Wicklungen, ausgebildet.

Wenn der Anker 3 beginnt zu oszillieren, erfolgt dies in Richtung des Stators 2 beziehungsweise in Richtung des Vorsprungs 21. Wenn der Anker 3 aufgrund seiner Beschleunigung die durch die bestrombare Spule bedingte neutrale Ruhelage des Ankers 3 überschreitet, so ändern sich die Kräfteverhältnisse derart, dass der Anker 3 abgebremst und in die entgegengesetzte Richtung beschleunigt wird. Dieser Effekt hilft dabei, den Anker 3 auszubremsen, bevor er den Vorsprung 21 erreicht, so dass ein mechanisches Verklemmen oder ein mechanischer Kontakt von Anker und Stator 2 verhindert wird. Das Federelement 9 unterstützt die oszillierende Bewegung.

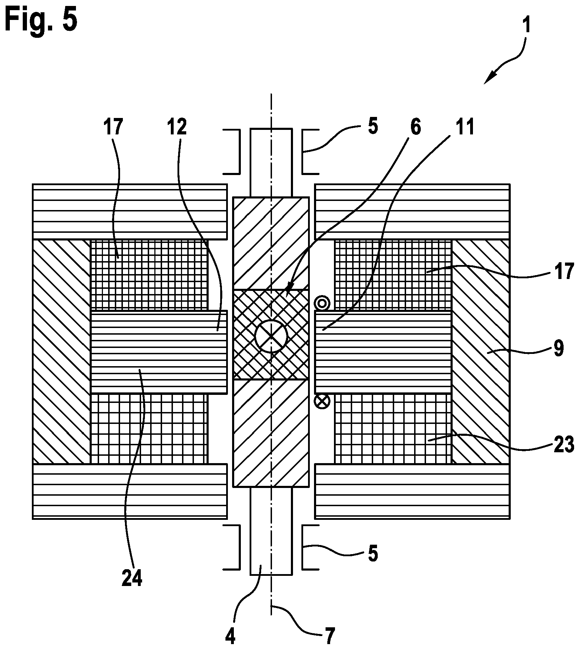

Figur 5 zeigt ein zweites Ausführungsbeispiel der Linearmaschine 1, wobei aus den vorhergehenden Figuren bereits bekannte Elemente mit den gleichen Bezugszeichen versehen sind, so dass insofern auf die oben stehende Beschreibung verwiesen wird. Im Folgenden soll im Wesentlichen nur auf die Unterschiede eingegangen werden.

Das Ausführungsbeispiel der Linearmaschine 1 von Figur 5 unterscheidet sich von dem vorhergehenden Ausführungsbeispiel dadurch, dass der Stator 2 zusätzlich zu der Spule 17 eine zweite Spule 23 aufweist, die dem ersten Statorjoch 9 zugeordnet ist. Figur 5 zeigt insofern einen Längsschnitt der Linearmaschine 1 durch die Ebene des Statorjochs 9, wie auch in Figuren 3A und 4A. Die beiden Spulen 17, 23 sind durch einen Stahllamellenpaketring 24 in Richtung der Ankerachse 7 voneinander getrennt. Der Stahllamellenpaketring 24 bildet dabei die den Permanentmagneten 6 zugeordneten Statorpole 11, 12 des Statorjochs 9. Der Betrieb der Linearmaschine 1 gemäß dem zweiten Ausführungsbeispiel entspricht im Wesentlichen dem des ersten Ausführungsbeispiels, wobei die beiden Spulen 17 und 23 unabhängig voneinander bestromt werden können, um die oszillierende Bewegung des Ankers 3 anzusteuern.

Grundsätzlich handelt es sich bei dem Permanentmagneten 6 bevorzugt um einen Seltene-Erde-Magneten, insbesondere NdFe35. Gemäß dem zweiten Ausführungsbeispiel wird auf das Federelement 8 verzichtet. Auch bei dem ersten Ausführungsbeispiel könnte auf das Federelement 8 verzichtet werden. Ebenso kann die Oszillierbewegung der Linearmaschine 1 im zweiten Ausführungsbeispiel durch das Vorsehen des Federelements 8 unterstützt werden. In jedem Fall wird ein Hybrid-Linear-Reluktanz-Motor beziehungsweise eine Hybrid-Linear-Reluktanzmaschine gebildet, der beziehungsweise die einerseits durch eine elektrisch erregten Magnetfluss und andererseits durch einen Permanentmagnet-erregten Magnetfluss betrieben wird.

## Patentansprüche

1. Elektrische Linearmaschine (1), mit einem gehäusefesten Stator (2) und mit einem axial verlagerbaren Anker (3), wobei der Stator (2) ein erstes und ein zweites Statorjoch (9,10) aufweist, die jeweils einen Statorpol (11-14) bilden, wobei die Statorpole (11-14) radial und gleichmäßig um den Anker (3) herum verteilt angeordnet sind, und wobei dem ersten Statorjoch (9) zumindest eine bestrombare Spule (17) zur Erzeugung eines ersten Magnetflusses durch das erste Statorjoch (9) zugeordnet ist, **dadurch gekennzeichnet, dass** der Anker mit einem Permanentmagneten bestückt ist, wobei ein magnetischer Nordpol (N) des Permanentmagneten (6) einem Statorpol (13) des zweiten Statorjochs (10) und ein magnetischer Südpol (S) des Permanentmagneten (6) dem anderen Statorpol (14) des zweiten Statorjochs (10) zugeordnet ist, um einen zweiten Magnetfluss durch das zweite Statorjoch (10) zu erzeugen.

2. Linearmaschine nach Anspruch 1, **dadurch gekennzeichnet, dass** dem Anker (3) wenigstens ein Federelement (8) zugeordnet ist, welches den Anker (3) derart vorspannt, dass sich der Permanentmagnet (6) außerhalb einer magnetisch neutralen Ruhelage befindet.

3. Linearmaschine nach einem der vorhergehenden Ansprüche, **dadurch gekennzeichnet, dass** der Permanentmagnet (6) eine erste durch den Permanentmagnet (6) bestimmte magnetisch neutrale Ruhelage und eine zweite durch die bestromte Spule (13) bestimmte magnetisch neutrale Ruhelage aufweist, wobei die erste und die zweite magnetische Ruhelage axial voneinander beabstandet sind.

4. Linearmaschine nach einem der vorhergehenden Ansprüche, **dadurch gekennzeichnet, dass** dem Permanentmagnet (6) wenigstens ein Stahllamellenpaket (19,20) zugeordnet ist, um einen Magnetfluss zu lenken.

5. Linearmaschine nach einem der vorhergehenden Ansprüche, **dadurch gekennzeichnet, dass** an dem Nordpol des Permanentmagneten (6) und an dem Südpol (S) des Permanentmagneten (6) jeweils ein Stahllamellenpaket (19) angeordnet ist, dessen Stahllamellen sich senkrecht zu dem zweiten Magnetfluss erstrecken.

6. Linearmaschine nach einem der vorhergehenden Ansprüche, **dadurch gekennzeichnet, dass** das jeweilige Statorjoch (9,10) jeweils als offener Statorring ausgebildet ist, dessen freie Enden jeweils einen der Statorpole (11-14) bilden.

7. Linearmaschine nach einem der vorhergehenden Ansprüche, **dadurch gekennzeichnet, dass** dem zweiten Statorjoch (10) zur Erfassung des zweiten Magnetflusses eine Sensoreinrichtung (15), insbesondere mit einer Sensorspule (16), zugeordnet ist.

8. Linearmaschine nach einem der vorhergehenden Ansprüche, **gekennzeichnet durch** eine Steuereinheit (S), die in Abhängigkeit von dem erfassten zweiten Magnetfluss die Spule (17) bestromt.

9. Linearmaschine nach einem der vorhergehenden Ansprüche, **dadurch gekennzeichnet, dass** der Permanentmagnet (6) an einer bezüglich des ersten Statorjochs (9) nach innen weisenden Stirnseite ein Stahllamellenpaket (20) aufweist, dessen Stahllamellen sich senkrecht zu dem zweiten Magnetfluss erstrecken.

10. Linearmaschine nach einem der vorhergehenden Ansprüche, **dadurch gekennzeichnet, dass** dem ersten Statorjoch (9) eine zweite bestrombare Spule (23) zugeordnet ist, wobei die erste Spule und die zweite Spule durch ein Stahllamellenpaketring (24) voneinander getrennt sind, und wobei der Permanentmagnet des Ankers (3) im Bereich des Stahllamellenpaketrings (24) verlagerbar ist.

## Claims

1. Electrical linear machine (1), having a stator (2) that is fixed to the housing, and having an armature (3) that can be relocated in an axial manner, wherein the stator (2) comprises a first and a second stator yoke (9, 10) that in each case form a stator pole (11 - 14), wherein the stator poles (11 - 14) are arranged distributed radially and uniformly around the armature (3), and wherein at least one coil (17) that can be energized is allocated to the first stator yoke (9) so as to generate a first magnetic flux through the first stator yoke (9), **characterized in that** the armature is fitted with a permanent magnet, wherein a magnetic north pole (N) of the permanent magnet (6) is allocated to a stator pole (13) of the second stator yoke (10) and a magnetic south pole (S) of the permanent magnet (6) is allocated to the other stator pole (14) of the second stator yoke (10) in order to generate a second magnetic flux through the second stator yoke (10).

2. Linear machine according to Claim 1, **characterized in that** at least one resilient element (8) is allocated to the armature (3), said resilient element pre-stressing the armature (3) in such a manner that the permanent magnet (6) is located outside a magnetically neutral resting position.

3. Linear machine according to any one of the preceding claims, **characterized in that** the permanent magnet (6) comprises a first magnetically neutral resting position that is determined by means of the permanent magnet (6) and a second magnetically neutral resting position that is determined by means of the coil (13) that is energized, wherein the first and second magnetic resting positions are spaced from one another in an axial manner.

4. Linear machine according to any one of the preceding claims, **characterized in that** at least one steel lamellae package (19, 20) is allocated to the permanent magnet (6) in order to guide the magnetic flux.

5. Linear machine according to any one of the preceding claims, **characterized in that** in each case a steel lamellae package (19) is arranged on the north pole of the permanent magnet (6) and on the south pole (S) of the permanent magnet (6) and the steel lamellae of said lamellae package extend perpendicular to the second magnetic flux.

6. Linear machine according to any one of the preceding claims, **characterized in that** the respective stator yoke (9, 10) is embodied in each case as an open stator ring whose free ends in each case form one of the stator poles (11 - 14).

7. Linear machine according to any one of the preceding claims, **characterized in that** a sensor device (15), in particular having a stator coil (16), is allocated to the second stator yoke (10) so as to ascertain the second magnetic flux.

8. Linear machine according to any one of the preceding claims, **characterized by** a control unit (S) that energizes the coil (17) in dependence upon the ascertained second magnetic flux.

9. Linear machine according to any one of the preceding claims, **characterized in that** the permanent magnet (6) comprises a steel lamellae package (20) on an end face that faces inwards in relation to the first stator yoke (9), and the steel lamellae of said lamellae package extend perpendicular to the second magnetic flux.

10. Linear machine according to any one of the preceding claims, **characterized in that** a second coil (23) that can be energized is allocated to the first stator yoke (9), wherein the first coil and the second coil are separated from one another by means of a steel lamellae package ring (24), and wherein the permanent magnet of the armature (3) can be relocated in the region of the steel lamellae package ring (24).

## Revendications

1. Moteur électrique linéaire (1) comportant un stator (2) fixé au boîtier et une armature (3) mobile axialement, dans lequel le stator (2) comporte des première et deuxième culasses de stator (9, 10) dont chacune forme un pôle de stator (11-14), dans lequel les pôles de stator (11-14) sont disposés radialement et de manière régulièrement répartie autour de l'armature (3), et dans lequel au moins une bobine pouvant être alimentée en courant (17) est associée à la première culasse de stator (9) pour générer un premier flux magnétique à travers la première culasse de stator (9), **caractérisé en ce que** l'armature est pourvue d'un aimant permanent, dans lequel un pôle nord magnétique (N) de l'aimant permanent (6) est associé à un pôle de stator (13) de la seconde culasse de stator (10) et un pôle sud magnétique (S) de l'aimant permanent (6) est associé à l'autre pôle de stator (14) de la seconde culasse de stator (10) afin de générer un second flux magnétique à travers la seconde culasse de stator (10).

2. Moteur linéaire selon la revendication 1, **caractérisé en ce qu'**au moins un élément à ressort (8) est associé à l'armature (3), lequel élément à ressort précontraint l'armature (3) de telle manière que l'aimant permanent (6) se trouve en dehors d'une position de repos magnétiquement neutre.

3. Moteur linéaire selon l'une des revendications précédentes, **caractérisé en ce que** l'aimant permanent (6) présente une première position de repos magnétiquement neutre déterminée par l'aimant permanent (6) et une seconde position de repos magnétiquement neutre déterminée par la bobine alimentée en courant (13), dans lequel les première et seconde positions de repos magnétiques sont espacées axialement l'une de l'autre.

4. Moteur linéaire selon l'une des revendications précédentes, **caractérisé en ce qu'**au moins un empilement de lamelles en acier (19, 20) est associé à l'aimant permanent (6) afin d'orienter un flux magnétique.

5. Moteur linéaire selon l'une des revendications précédentes, **caractérisé en ce qu'**un empilement de lamelles d'acier (19) est respectivement disposé sur le pôle nord de l'aimant permanent (6) et sur le pôle sud (S) de l'aimant permanent (6), dont les lamelles en acier s'étendent perpendiculairement au second flux magnétique.

6. Moteur linéaire selon l'une des revendications précédentes, **caractérisé en ce que** la culasse de stator (9, 10) respective est réalisée respectivement sous la forme d'un anneau de stator ouvert dont les extrémités libres forment respectivement l'un des pôles de stator (11-14) .

7. Moteur linéaire selon l'une des revendications précédentes, **caractérisé en ce qu'**un dispositif de détection (15), comportant notamment une bobine de capteur (16), est associé à la seconde culasse de stator (10) pour détecter le second flux magnétique.

8. Moteur linéaire selon l'une des revendications précédentes, **caractérisé par** une unité de commande (S) qui alimente en courant la bobine (17) en fonction du second flux magnétique détecté.

9. Moteur linéaire selon l'une des revendications précédentes, **caractérisé en ce que** l'aimant permanent (6) comporte un empilement de lamelles en acier (20) sur une face frontale tournée vers l'intérieur par rapport à la première culasse de stator (9), dont les lamelles en acier s'étendent perpendiculairement au second flux magnétique.

10. Moteur linéaire selon l'une des revendications précédentes, **caractérisé en ce qu'**une seconde bobine pouvant être alimentée en courant (23) est associée à la première culasse de stator (9), dans lequel la première bobine et la seconde bobine sont séparées l'une de l'autre par un anneau (24) d'empilement de lamelles en acier, et dans lequel l'aimant permanent de l'armature (3) est mobile dans la région de l'anneau (24) d'empilement de lamelles en acier.
